(19) Europäisches Patentamt
European Patent Office
Office européen des brevets

(11) Publication number: 0 067 533 B1

(12) **EUROPEAN PATENT SPECIFICATION**

(45) Date of publication of patent specification: **12.03.86**

(51) Int. Cl.[4]: **B 01 J 13/02**, A 01 N 25/28, C 08 L 31/04, C 08 L 33/06

(21) Application number: **82302496.3**

(22) Date of filing: **17.05.82**

# (54) Process of spray micro-encapsulation and composition for use therein.

(30) Priority: **18.05.81 US 264822**

(43) Date of publication of application: **22.12.82 Bulletin 82/51**

(45) Publication of the grant of the patent: **12.03.86 Bulletin 86/11**

(84) Designated Contracting States: **AT BE CH DE FR IT LI LU NL SE**

(56) References cited:
FR-A-2 430 259
GB-A-2 013 610
US-A-3 007 887
US-A-3 091 567
US-A-3 455 838
US-A-3 872 023
US-A-4 107 071

CHEMICAL ABSTRACTS, vol. 92, no. 5, 4th February 1980, page 679, left-hand column, no. 40649z, Columbus, Ohio, USA

(73) Proprietor: **ENVIRONMENTAL CHEMICALS, INC.**
**P.O. 346 1111 North Old Rand Road**
**Wauconda, IL 60084 (US)**

(72) Inventor: **Himel, Chester M.**
**165 Xavier Drive**
**Athens Georgia 30601 (US)**
Inventor: **Cardarelli, Nathan F.**
**439 Crestwood Avenue**
**Akron Ohio 44302 (US)**

(74) Representative: **Austin, Hedley William et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 067 533 B1

## Description

The present invention is concerned with a process of spray micro-encapsulation of materials such as fungicides, herbicides, insecticides and the like, in which the material to be encapsulated and a film-forming polymer are sprayed together into the atmosphere in such a way that the polymer coacervates and encapsulates the above-mentioned material while they are still in the form of a spray. Such a process is frequently referred to herein as "in-flight encapsulation".

Micro-encapsulation is a well known technique. For example, U.S. Patents 3,242,051, 3,265,629, 3,575,882, and 3,607,776 all relate to processes dependent upon phase separation and polycondensation reactions. Specifically, U.S. Patent 3,242,051 relates to preparing a solution of a liquid phase-forming micro-molecular polymer in a first non-aqueous liquid, dispersing in said solution a plurality of individual discrete particles, adding a second liquid soluble in the first liquid, but not soluble with regard to said micro-molecular polymer, whereby phase separation is induced and the dispersed particles are precoated, settling the polymer-rich precoat, separating the precoated particles, suspending the precoated particles in an aqueous solution of a gel, and using phase separation so as to cause the formation of a colloidal-enriched phase and the encapsulation of each of these suspended precoated particles, and cooling.

U.S. Patent 3,265,629 is similar but relates to the application of two coatings to the particles, namely a solid lipid and a polymer.

U.S. Patent 2,648,609 relates to an air suspension technique wherein a sugar solution is sprayed on to a suspended item such as candy, gum, etc. Another known technique involves charging a first solution with ions so that the solution exhibits a specific charge, applying an opposite charge to a second solution, and then coating the first solution with the second solution via air flow.

U.S. Patent 3,202,533 relates to the encapsulation of liquids by the use of the fluidized bed wherein the fluidized liquid is frozen and spray coated.

All the above processes employ multiple compounds or compositions of matter and require processing the encapsulation or micro-encapsulated article prior to usage or application. Moreover, costly and complex processing equipment as well as difficult technology is required to produce articles of a defined size and to meet mandatory environmental controls or regulations.

Compounds such as "PRO-TEC", manufactured by Agro-K Corporation, are intended to form a semi-permeable membrane which may spread over leaf surfaces because of its good surfactant properties; these membrane chemicals (which do not form micro-capsules) are difficult to apply, as are membrane materials described in U.S. Patents 2,972,545; 3,015,128; 3,681,089; 3,681,248; 3,932,602 and 3,939,099.

According to the present invention there is provided a process for the in-flight encapsulation of particles and other materials.

According to the invention, therefore, there is provided a spray micro-encapsulation process, which comprises spraying into the atmosphere a composition comprising 35 to 99% by weight of a liquid vehicle, 0.1 to 25% by weight of a film-forming polymer and not more than 40% by weight of material to be encapsulated so as to cause said liquid vehicle to evaporate and said polymer to coacervate and encapsulate said material while the composition is still in the form of a spray, characterised in that said composition further contains from about 1% to 40% by weight of a core agent which is insoluble in said polymer and is such as to control release of said material from the resulting microcapsules, said percentages being based on the total weight of the composition.

Such control of release of microencapsulated material may be effected, for example, by adding bulk to the core, or by controlling the volatility or solubility of the encapsulated material. Release of the encapsulated material obtained according to the invention can be controlled so as to take place over days or months rather than minutes or hours.

The film-forming polymer and the material to be encapsulated may each, independently, be dissolved or dispersed in the liquid vehicle.

The composition used in the process according to the invention may additionally contain a further polymer which is such as to modify the stability or film-forming characteristics of the film-forming polymer, or modify the release characteristics of the resulting microcapsules.

Microcapsules produced by the process according to the invention are generally of uniform size and have an outer polymer membrane surrounding a core. Because of the uniform size, the process can have good target specificity for application to, for example, an agricultural or forested area.

As indicated, the process according to the invention involves "in-flight encapsulation"; that is, the material is encapsulated while the composition is still in the atmosphere, as the liquid vehicle evaporation and the film-forming polymer coacervates.

As indicated above, the film-forming polymer may be either dissolved or dispersed in the liquid vehicle; in the latter case, the polymer may be in the form of a colloidal dispersion or an emulsion. In general, for a polymer which is soluble in the liquid vehicle, if its molecular weight is increased, there comes a point at which it is no longer soluble and forms a colloidal dispersion. Further increase in the molecular weight causes the production of an emulsion, which may have a viscosity virtually identical to that of the liquid vehicle.

The composition comprising the liquid vehicle,

the film-forming polymer and the material to be encapsulated may be a homogeneous solution; it may comprise the material to be encapsulated dispersed. in a solution of the film-forming polymer in the liquid vehicle; or the composition may comprise three phases.

As indicated, the above-mentioned composition contains 0.1 to 25% by weight, based on the total weight of the composition. A referred amount thereof is 2 to 18% by weight (same basis); 4 to 13% by weight is most preferred.

A plurality of such film-forming polymers may be present; such polymers may act together to control solubilisation of encapsulated material and release thereof.

The film-forming polymer used should, of course, be capable of coacervating so as to form a polymeric microcapsule wall around the material to be encapsulated. Specific examples of suitable film-forming polymers are polyvinyl alcohol, polyvinyl acetate, or polyvinyl ethers with a weight average molecular weight of 10,000 to 100,000; such polyvinyl ethers are preferably polyvinyl alkyl ethers in which the alkyl group has 2 to 10 carbon atoms (preferably ethyl). Such polymers are generally soluble in the liquid vehicle.

A further class of film-forming polymers which may be used in the process according to the present invention is an acrylic polymer, such as a polymer comprising at least one acrylic monomer of the formula (V)

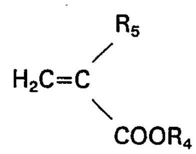 (V)

in which $R_4$ is hydrogen, or an alkyl, cycloalkyl, aryl or aralkyl group having not more than 30 carbon atoms, and $R_5$ is hydrogen, or an alkyl, cycloalkyl, aryl or aralkyl group having not more than 12 carbon atoms.

Preferably, $R_4$ is an alkyl group having 1 to 4 carbon atoms, or hydrogen, and $R_5$ has 1 to 3 carbon atoms or is hydrogen; it is particularly preferred that $R_5$ is hydrogen or methyl.

The polymer of the above-mentioned acrylic monomer may be a homopolymer or copolymer, which is preferably carboxylated (that is, a substantial proportion of the pendant groups are carboxyl).

Acrylic polymers of molecular weight 10,000 to about 400,000 are generally soluble in the sort of liquid vehicles used in the process according to the invention; acrylic polymers of molecular weight from about 400,000 to 800,000 generally form colloidal dispersions; while higher molecular weight polymers, having a molecular weight of from about 800,000 to several million (e.g. 3—4 million) generally form emulsions. Polymers which form colloidal dispersions or emulsions are particularly preferred for use in one embodiment of the present invention as they generally tend to from stronger films; they can therefore be used in smaller amounts to form films of adequate strength.

Acrylic polymers comprising monomers of the above formula (V), having a molecular weight of at least 300,000, more preferably at least 400,000, are therefore preferred when it is desired to use a polymer in the form of a colloidal dispersion or emulsion. Examples of such polymers which are commercially available, and have molecular weights greater than 400,000, are commercially available from Rohm and Haas Company under the trade marks Rhoplex and Acrysol, such as Rhoplex AC-64, AC-22, LC-45 or LC-40, or Acrysol A-1, A-3, A-5, or WS-12 (the latter generally forms a colloidal dispersion).

One preferred class of polymers for use in the process according to the invention is a salt of an interpolymer of alpha-beta olefinically unsaturated carbonyl monomers which contain N-methylol acrylamides (e.g. as described in U.S. Patent 3007887). A preferred such interpolymer is the salt of an acid polymer containing a random distribution of n% by weight of units of formula I, x% by weight of units of formula II, y% by weight of units of formula III, and z% by weight of units of formula IV;

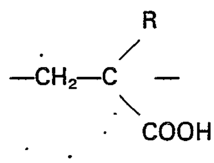 (I)

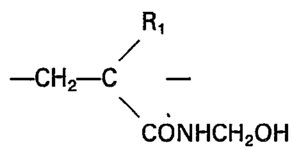 (II)

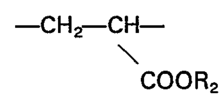 (III)

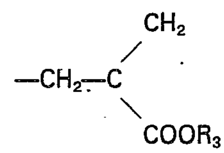 (IV)

in which R and $R_1$ are each H or methyl, $R_2$ is methyl, eithyl, n- or iso- propyl or butyl (e.g. n-, sec- or iso-butyl), $R_3$ is methyl or ethyl, n is 3 to 12, x is 8 to 25, y is 45 to 89 and z is 0 to 44, and $n+x+y+z=100$.

The salt of the acid polymer is formed by reaction of the acid polymer with a neutralizing agent such as ammonia, hydrazine, a low boiling primary or secondary aliphatic amine, the reaction being effected typically in alochol such that the final polymer is soluble in water of pH 5 to 8 (preferably 6 to 7).

The resulting solution of the polymer salt typically contains 2 to 40% by weight of polymer, more preferably 5 to 30% by weight of polymer, in water.

Units of formula III are preferably derived from methyl or ethyl acrylate; units of formula IV are preferably derived from methyl methacrylate and the units of formula II are preferably derived from N-methylol acrylamide.

The polymer containing the above units I, II, III and IV generally has a weight average molecular weight of 20,000 to 1,000,000. When the polymer is soluble in the liquid vehicle, this is preferably 30,000 to 250,000. In the molecular weight range 300,000 to 500,000, the polymer forms a colloidal dispersion in the liquid vehicle; while in the molecular weight range from about 500,000 to about 2 or 3 million, the polymer forms an emulsoidal dispersion.

Specific examples of the above interpolymers include Carboset XL11 (molecular weight of about 45,000), Carboset 514 (molecular weight of about 30,000), Carboset 515 (molecular weight of about 7,000), Carboset 525 (molecular weight of about 260,000), Carboset 526 (molecular weight of 300,000), all manufactured by the B.F. Goodrich Company. (Carboset is a Trade Mark). Other examples of film-forming polymers which can be used in the process according to the invention include Vinol 205, 523 and 540 (87% hydrolysed polyvinyl alcohol or molecular weight 22,000, 77,000 and 106,000, respectively). Vinol is also a Trade Mark.

Some of the above polymers are ultimately both in the wall and in the core and change the properties of the core/wall interface. Carboset 515 is particularly valuable in providing a gel-type core which stabilizes and limits the release of actve agents. Vinol 205, 523 and 540 act as emulsifying agents for core materials not soluble in water and in addition position in the core and wall to change the properties, particularly the solubility of the core material in the wall. Carboset 515 and Vinol 205 are specifically valuable in dispersion and stabilization of protein-type insecticides such as *Bacillus Thuringiensus.* Carboset 525 and 514 are specifically valuable in increasing the wall-forming properties of the high molecular weight (dispersion) polymers.

The liquid vehicle used in the process according to the invention may be any liquid which will solubilize or colloidally or emulsoidally disperse the above polymers. Generally, water and alcohols having from 1 to 5 carbon atoms, and combinations thereof, may be used. Examples of specific alcohols include methanol, propanol, isopropanol, butanol, isobutanol and pentanol; ethanol is preferred. Other suitable liquids include acetone, diisobutyl ketone, methyl ethyl ketone, dioxane, and methylene chloride. Methanol and water are particularly preferred (water being most preferred) when the material to be encapsulated is dispersed in the liquid vehicle. The amount of the liquid vehicle is, as indicated above, 35 to 99% by weight; a preferred amount is 50 to 90% (same basis).

The material to be encapsulated can be a solid, but generally it is a liquid. Regardless of wether the material is a solid or a liquid, it should by any material which, as part of the self-encapsulating composition, can be sprayed using conventional spraying apparatus. The material to be encapsulated may be in the form of particles of suitable size. By way of example, particles at least 90% of which have less than 1 micron to 300 microns may be utilized, although, generally, they are from a much smaller range as from about 1 to 150 microns. For insecticides, odorants, etc., the use of particles smaller than 100 microns, typically from 1 to 50 microns, is often preferred. The smaller particle sizes permit a thinner wall and the concentration of the film-forming polymer may therefore be reduced in the encapsulation composition. However, higher molecular weight polymers, which are colloidally or emulsoidally dispersed in the liquid vehicle at concentrations of 0.01% may form strong films for particles having a size less than 100 microns.

It is often desirable that the material to be encapsulated, the liquid vehicle, the core agent and the film-forming polymer should be chemically compatible in the sense that they do not chemically interact.

The material to be encapsulated may be, for example, a trace mineral (or trace nutrient), an insecticide, an acaricide, a mematocide, a molluscicide, a herbicide, a fungicide, a pheromone, an odorant, a fragrance, an attractant, a repellant, or a mixture of two or more thereof. Specific examples of suitable materials to be encapsulated are listed below.

Trace Nutrients

| | |
|---|---|
| Zinc chloride | Boric acid |
| Zinc sulfate | Sodium borate |
| Ferric chloride | Sodium selenate |
| Ferric sulfate | Cobalt sulfate |
| Copper sulfate | Sodium molybdate |
| Copper oxychloride | Manganese chloride |
| Manganese sulfate | |

Insecticides and Acaricides

0,0-diethyl-0-p-nitrophenyl phosphorothioate (parathion)
0,0-dimethyl-0-p-nitrophenyl phosphorothioate (Methyl parathion)
0,0-dimethyl-0-(3-methyl-4-nitrophenyl)phosphorothioate (Sumithion)
0,0-diethyl-0-(2-isopropyl-6-methyl-5-pyrimidinyl) phosphorothioate (Diazinon)
0,0-dimethyl-0-(3-methyl-4-(methlythio)phenyl) phosphorothioate (Fention)
Pyrethrin-piperonyl butoxide and pyrethroids, with or without synergists or adjuvants
1-naphthyl methylcarbamate (Carbaryl)
2-(1-methylethoxy)phenol methylcarbamate (Baygon, manufactured by Chemagro)
2-methyl-2-(methylthio)propionaldehyde-0-(methyl carbamoyl)oxime (Aldicarb, manufactured by Union Carbide)
S-methyl-N-[methylcarbamoyl (oxy)] thioacetamide (lannate)
Chlorinated camphene, 67 percent Octachloro camphene (Toxaphene, manufactured by Hercules)
Tricalcium arsenate
Sodium aluminum fluoride
Dichlorodiphenyltrichloroethane
Tricyclohexyltin hydroxide (Plictran, manufactured by Dow Chemical)
1,1,1-Trichloro-2,2-Bis(P-methoxyphenyl)ethane(methoxychlor)
1,2-dibromo-2,2-dichloroethyl dimethyl phosphate (naled)

Nematicides

0,0-diethyl-0-2,4-dichlorophenyl phosphorothioate (dichlorofenthion)
N,N-dimethyl dodecanamide
0-Ethyl S,s-dipropyl phosphorodithioate (Ethoprop)

Molluscicides

Copper sulfate
Tributyltin fluoride
n-tritylmorpholine(trifenmorph)
Sodium pentachlorophenate
Niclosamide

Herbicides

2,4-dichlorophenoxyacetic acid (2,4-D)
Alkylamine salts of 2,4-D
Butoxyethanol ester of 2,4-D
2,4,5-trichlorophenoxyacetic acid (2,4,5-T)
2-(2,4,5-trichlorophenoxy)propionic acid (Silvex)
3-amino-2,5-dichlorobenzoic acid (chloramben)
3,6-dichloro-0-anisic acid (Dicamba)
2,3,6-trichlorophenylacetic acid (Fenac)
2,6-dichlorobenzonitrile (Dichlobenil)
N,N-diallyl-2-chloroacetamide (Randox)
S-Ethyl diisobutylthiocarbamate (Sutan)
Isopropyl N-(3-chlorophenyl)carbamate (chloropropham)
3-amino-1,2,4-triazol (Amitrole)
2-chloro-4,6-Bis(ethylamino)-S-triazine (Simazine)
2-chloro-4-ethylamino-6-isopropylamino-S-triazine (Atrazine)
6,7-dihydrodipyrido(1,2-a:2′,1′-c)pyrazinediium dibromide (Diquat)

Fungicides

Hexachloraphene
Triphenyltin acetate
Methyl-1-(butacarbamoyl)-2-benzimidazole carbamate (Benomyl)

Pheromones

Disparlure; cis-7,8-epoxy-2-methyloctadecane
Gossyplure; a mixture of 2,2-7,11-hexadecadienyl acetate and 2,E-7,11-hexadecadienyl acetate
Looplure; (2)-7-dodecenyl acetate

Plant Regulants

Maleic hydroxide (Ethrel)
Glycosate (Round up)
Triacontinol

When the material to be encapsulated in the process according to the invention is a pheromone it may be present in an amount as low as 0.01% by weight based on the total weight of liquid vehicle, film-forming polymer and material to be encapsulated; a preferred amount is from 0.05 to 10% (same basis).

For other materials to be encapsulated, the amount thereof is preferable at least 1%, more preferably 5 to 30% (same basis).

As mentioned above, the composition used in the process according to the invention contains, in addition to the liquid vehicle, the film-forming polymer and the material to be encapsulated, a core agent which is insoluble in the film-forming polymer and is such as to control release of material from the resulting microcapsules. Such core agents may add bulk to encapsulated material, to prevent material being trapped within the capsule wall; core agents are particularly useful where the material to be encapsulated is highly volatile (e.g. a pheromone).

Also, where the material to be encapsulated has a certain amount of solubility in the film-forming polymer, the core agent may act to decrease such solubility. This is particularly useful in the case of materials such as Methyl parathion and m-diethyltoluamide (DEET). The core agent may also serve to prevent degradation of the encapsulated material or the film-forming polymer by ultra-violet radiation. Examples of suitable core agents for use in the process according to the invention are as follows:

1. Monohydric alcohols having from 6 to 20 carbon atoms (e.g. octyl alcohol, decyl alcohol or dodecyl alcohol) or a mono- or poly-unsaturated derivative thereof;

2. Polyhydric alcohols having from 2 to 10 carbon atoms and the monoesters, diesters, triesters or monoethers thereof, homopolymers thereof, and the homopolymer monoethers thereof, e.g. glycol and polyglycol monoethers, polypropylene glycol monobutyl ether, propylene glycol, polypropylene glycol, polyethylene glycol, sorbitol or glycerine;

3. Saturated and unsaturated fatty acids having from 8—20 carbon atoms and the alkyl esters thereof; e.g. monoglycerides, diglycerides or triglycerides;

4. Absorbent or porous solids (such as carbon black, silica, and molecular sieves, and combinations thereof);

5. Sunscreen materials; and

6. Soy oil.

Preferred core agents are the above-mentioned polyhydric alcohols and fatty acids, and di- and tri-esters of the polyhydric alcohols (especially the tri-glycerides).

The core agent is generally present in an amount of at least 1% by weight, based on the total weight of liquid vehicle, film-forming polymer and material to be encapsulated. A preferred amount thereof is 2 to 25%, more preferably 3 to 5% (same basis).

Generally, the microcapsules obtained according to the present invention are degraded in the environment. The effects of the rain and sun can be detrimental to the longevity of the capsules and the active ingredients in the core. However, longevity can be enhanced in several ways as by increasing the amount or thickness of the enveloping polymer membrane. This can be achieved by using more film-forming polymer or specific interpolymers which have enhanced leaching resistance.

Crosslinking agents may also be present so that, upon forming the microcapsules, the film-forming polymer is crosslinked. Crosslinking decreases the pore size and, hence, increases duration of longevity so that the final capsules may be used over a period of several months. Suitable crosslinking agents include urea, di- or tri-amines, di- or tri-amides or alkaline earth metal salts (the alkaline earth metal being beryllium, magnesium, barium or, preferably, calcium). Suitable such salts include carbonates, bicarbonates, nitrates, oxides, hydroxides, and halides, for example, $F^-$, $Cl^-$, $I^-$, and $Br^-$. Of these, the calcium salts, especially calcium hydroxide and calcium chloride are preferred. Moreover, polymers may be crosslinked with zinc oxide as taught in U.S. Patent 3,749,772.

Generally, the amount of crosslinking agent may range from 0.01 to 0.5% by weight, based upon the total weight of the liquid vehicle, film-forming polymer and material to be encapsulated; 0.05 to 0.25% (same basis) is preferred. Naturally, the crosslinking agents should be nontoxic, generally, non-reactive with the composition, and soluble in the liquid vehicle used in the process according to the present invention.

The composition used in the process according to the present invention may additionally contain a further polymer and/or an adhesive agent so as to modify the film forming properties of the first-mentioned film-forming polymer, to control the release of the material from the resulting microcapsules and/or the adhesion of the

polymer to the material to be encasulated. Other materials, such as emulsifiers, may also be present.

The further polymer preferably has poor or negligible film-forming properties; an example thereof is polystyrene, preferably in an amount of 0.1 to 10% (more preferably 0.1 to 5%), based on the total weight of film-forming polymer, material to be encapsulated and liquid vehicle.

When the process according to the invention is to be used for, say, application of insecticides to protect crops, the long term adhesion of the microcapsule to foliage or other plant structures is desired. In this case, the amount of adhesive agent used in generally from 0.1 to 10% more preferably 0.1 to 3%, based on the total weight of film-forming polymer, liquid vehicle and material to be encapsulated. Typical preferred adhesive agents are alkyl esters, such as those of the formula

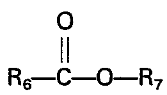

where $R_6$ and $R_7$ contain from 2 to 5 carbon atoms. Ethyl acetate is the preferred such alkyl ester. Other, suitable esters are diesters of phthalic acid, e.g. dioctylphthalate; polymers such as polyvinyl alcohol may also be used.

The composition used in the process according to the present invention is generally maintained in relatively a non-acidic state, usually at a pH of 6.5 to 8.0, preferably 7.0 to 8.0, to prevent crosslinking prior to evaporation of the liquid vehicle. Typical alkaline compounds which may be used to achieve such a pH range are ammonia and sodium hydroxide.

The process according to the invention may be carried out by spraying the composition using conventional spray equipment. Such spray equipment can be affixed to any suitable vehicle such as an aircraft or truck, or a spray system in a field; for use in the agricultural and public health areas. Subsequently and immediately after ejection, the spray during flight through the atmosphere rapidly loses solvent via evaporation, coacervation occurs, and small solid spheres are formed having generally a very uniform shape and size. Thus, in-flight encapsulation occurs during the short passage between the spray apparatus and the target area. Each microcapsule is comprised of an outer enveloping polymeric membrane wall and an inner core. The encapsulated product can be delivered to and within the target area using narrow spectrum sprays (for example, that produced by the Beeco Mist Nozzle, designed to provide a sufficient transport of the active ingredient to its target area). Generally, the various spray systems can be adjusted such that a few ounces of the composition is utilized for each acre or up to about 2 to 5 $cm^3$ per $m^2$. In the latter case, water is generally utilized as a solvent.

The process according to the invention can result in fairly uniform-size encapsulated products, that is, encapsulated products in which at least 90 percent of the products fall within a narrow range. Of course, the size of the capsules can be varied by changing the proportion of the various ingredients, the amount of crosslinking agent, core agent, as indicated above, or by using different spray equipment (the nozzles of which largely determine the initial egress droplet size spectrum). Thus, capsules of particle size from 1 micron to 500 microns or larger can be produced. Generally, however, capsules of from 1 to about 150 microns are desired for many applications.

A specific example of a suitable spraying apparatus which delivers croplets over a narrow range is manufactuerd by the Beeco Products Corporation. As a rough rule of thumb, the capsule size will be 80 percent of the initial droplet size leaving the spray nozzle, when the amount of liquid vehicle is equal to the amount of particles on a weight basis. Since great uniformity and droplet size as well as the encapsulated material can be controlled as described herein, the microcapsules produced according to the present invention are ideal as a research tool for the study and evaluation of spray equipment and effects of atmospheric parameters upon the spraying art.

Additionally, micro-encapsulated materials produced according to the present invention result in a controlled leaching rate at the site of application, which leads to greater efficacy, reduced contamination, and economic benefits. Also, non-persistent agents can be encapsulated and essentially rendered persistent at the application site, so that once released in the environment, they are subject to natural degradation so that persistence can be low at the site of application.

In order that the present invention may be more fully understood, the following Examples, in which all parts are by weight, are given by way of illustration only.

Example 1

One hundred parts of N,N-diethyl-meta-toluamide (DEET) repellent were added to 10 parts of soybean oil in 200 parts acetone which was added to 300 parts acetone containing 20 parts of Carboset 525 (the soybean oil was a core agent for solubility control in limiting the solubility of the DEET in Carboset 525 polymer and in controlling the volatility of the DEET).

The solution was sprayed through a Mini Ulva sprayer of Dmax 125 microns, to give excellent microcapsules with adequate wall stability, and a well defined wall system-core system.

In the absence of the soybean oil, Carboset 525 and DEET are miscible.

Example 2

Gossyplure (pink bollworm pheromone) 2 (grams) parts were dissolved in 300 parts cotton seed oil containing 3 percent Tween 80 as an emulsifier. Three hundred parts of Carboset 525 in 600 parts methanol and 30 parts ammonium hydroxide was added to $3.8 \times 10^3$ $cm^3$ water. The

core liquid was then added and the total emulsion volume made up to $7.6\times10^3$ $cm^3$. A total of $4\times10^4$ $m^2$ of irrigated cotton was sprayed at the rate of 2 $cm^3$ per $m^2$. Pink bollworm mating was substantially totally interrupted for a period of 20 days as evidenced by the absence of trap catches of male moths in pheromone-baited traps in the cotton field.

The core Agent (cottonseed oil) acted to allow excellent microcapsule formation and to limit the volatility of the pheromone (Gossyplure) over the twenty-day period.

In laboratory tests, oleyl alcohol, hexadecanol and decanol have been proven to be effective core agents, for various pheromones including Indian Meal Moth pheromone which remained actively emitted from microcapsules on foliage for periods up to 40 days, as measured by male activity towards air streams blown over microcapsules or leaves in a glass bioassay system.

Example 3

Rhoplex AC 64, 10 parts, was added to 100 parts water containing 5 parts of polystyrene dispersion. The polystyrene acted as a core-wall modifier. Soybean oil (20 parts) was emulsified in 100 parts water and added to the Rhoplex AC 64-polystyrene dispersion. The dispersion was diluted to 300 ml and sprayed as described in Example 1. Stable microcapsules with well defined wall system-core system core characteristics were formed.

The Rhoplex emulsion dispersions act in the presence of core liquids which allow capsule wall formation. Dioctyl phthalate and DEET are examples of Rhoplex polymer emulsion modifiers which assist in wall formation.

Example 4

A composition comprising 12 parts of Carboset 525, 10 parts Carboset XL 11, 44 parts ethanol, 3 parts of lauric acid and 31 parts of material to be encapsulated (for test purposes a 50:50 mixture of benzoic acid and ortho toluic acid) was sprayed through a Beeco Mist spray gun with 60 micron pore size nozzle.

**Claims**

1. A spray micro-encapsulation process, which comprises spraying into the atmosphere a composition comprising 35 to 99% by weight of a liquid vehicle, 0.1 to 25% by weight of a film-forming polymer and not more than 40% by weight of material to be encapsulated, so as to cause said liquid vehicle to evaporate and said polymer to coacervate and encapsulate with said material while the composition is still in the form of a spray, characterised in that said composition further contains from about 1% to 40% by weight of a core agent which is insoluble in said polymer and is such as to control release of said material from the resulting microcapsules, said percentages being based on the total weight of the composition.

2. A process according to claim 1, in which said polymer comprises at least one monomer of formula

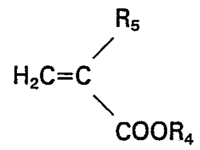

in which $R_4$ is hydrogen, or an alkyl, cycloalkyl, aryl or aralkyl group having not more than 30 carbon atoms and $R_5$ is hydrogen, or an alkyl, cycloalkyl aryl or aralkyl group having not more than 12 carbon atoms.

3. A process according to claim 1 or 2, in which the polymer is the salt of an acid polymer containing a random distribution of n% by weight of units of formula I, x% by weight of units of formula II, y% by weight of units of formula III, and z% by weight of units of formula IV:

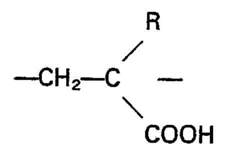 (I)

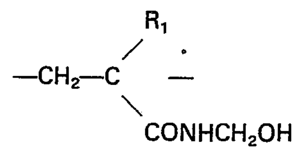 (II)

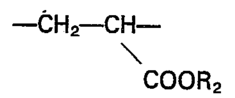 (III)

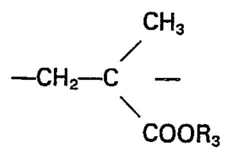 (IV)

in which R and $R_1$ are each H or methyl, $R_2$ is methyl, ethyl, propyl or butyl, $R_3$ is methyl or ethyl, n is 3 to 12, x is 8 to 25, y is 45 to 89 and z is 0 to 44, and n+x+y+z=100, said salt being formed between said acid polymer and ammonia, hydrazine, a low boiling primary or secondary aliphatic amine and being soluble in water of pH 5 to 8.

4. A process according to claim 2 or 3, in which the composition contains 0.01 to 5% by weight, based on said total weight of a cross-linking agent for the polymer, the cross-linking agent being urea, a di- or tri-amine, a di- or tri-amide, or a carbonate, bicarbonate, oxide, hydroxide, nitrate or halide of calcium, barium, beryllium or magnesium.

5. A process according to any of claims 1 to 4, in which the composition contains 0.01 to 1% by weight, based on said total weight, of an alkaline compound such that the composition has a pH of 6.5 to 8.0.

6. A process according to any of claims 1 to 5, in which the liquid vehicle is an alcohol having 1 to 5 carbon atoms, acetone, methyl ethyl ketone, dioxane, methylene chloride, water, or a mixture of two or more thereof.

7. A process according to any of claims 1 to 6, in which the composition comprises 50 to 90% by weight of the liquid vehicle, 4 to 13% by weight of the film-forming polymer and 5 to 30% by weight of the material to be encapsulated when the latter is not a pheromone and 0.05 to 10% by weight thereof when said material is a pheromone.

8. A process according to any of claims 1 to 7, in which the material to be encapsulated is a trace mineral, an insecticide, a fertilizer, an acaricide, a nematocide, a molluscicide, a herbicide, a fungicide, a pheromone, an odorant, a fragrance, attractant, a repellant, a plant regulant, or a mixture of two or more thereof.

9. A process according to any of claims 1 to 8, in which the composition contains a further polymer and/or an adhesive agent so as to modify the film-forming properties of the film-forming polymer, control the release of said material from the resulting microcapsules and/or the adhesion of the film-forming polymer to the material to be encapsulated.

10. A process according to any of claims 1 to 9, in which said core agent comprises an absorbent solid material and/or an ultraviolet screening material.

11. A process according to any of claims 1 to 10, in which said core agent comprises a monohydric alcohol having 6 to 20 carbon atoms or a mono- or polyunsaturated derivative thereof, a polyhydric alcohol having 2 to 10 carbon atoms, a monoether or a mono-, di- or tri-ester thereof, a fatty acid having 8 to 20 carbon atoms or an ester thereof.

12. A process according to claim 11, in which the core agent comprises soybean oil.

**Patentansprüche**

1. Sprüh-Mikroeinkapselungs-Verfahren, das umfaßt, das Versprühen einer Zusammensetzung mit 35 bis 99 Gew.-% eines flüssigen Lösungsmittels, 0,1 bis 25 Gew.-% eines filmbildenden Polymeren und nicht mehr als 40 Gew.-% Material, das eingekapselt werden soll, in die Atmosphäre in der Weise, daß das flüssig Lösungsmittel verdampft und das Polymere koazerviert und das Material einkapselt, während die Zusammensetzung noch in Form. eines Sprays vorliegt, dadurch gekennzeichnet, daß die Zusammensetzung außerdem etwa 1 bis 40 Gew.-% eines Kernmittels enthält, das in dem Polymeren unlöslich ist und dazu dient, die Freisetzung des Materials aus den resultierenden Mikrokapseln zu kontrollieren, wobei die Prozensätze auf das Gesamtgewicht der Zusammensetzung bezogen sind.

2. Verfahren nach Anspruch 1, worin das Polymere mindestens ein Monomer der Formel enthält

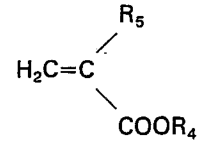

worin $R_4$ Wasserstoff oder eine Alkyl-Cycloalkyl-Aryl-oder Aralkylgruppe mit nicht mehr als 30 Kohlenstoffatomen und $R_5$ Wasserstoff oder eine Alkyl-Cycloalkyl-, Aryl- oder Aralkylgruppe mit nicht mehr als 12 Kohlenstoffatomen bedeuten.

3. Verfahren nach Anspruch 1 oder 2, worin das Polymere das Salz eines Säurepolymeren ist, das eine beliebige Verteilung von n Gew.-% Einheiten der Formel I, x Gew.-% Einheiten der Formel II, y Gew.-% Einheiten der Formel III und z Gew.-% Einheiten der Formel IV aufweist.

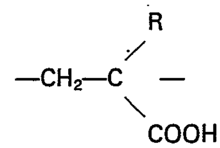

(I)

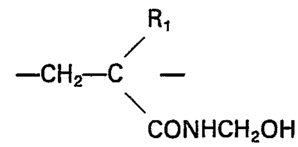

(II)

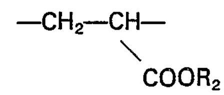

(III)

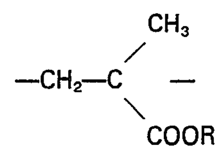

(IV)

worin R und $R_1$ jeweils H oder Methyl, $R_2$ Methyl, Ethyl, Propyl oder Butyl, $R_3$ Methyl oder Ethyl, n 3 bis 12, x 8 bis 25, y 45 bis 89 und z 0 bis 44 bedeuten und n+x+y+z=100, wobei das Salz gebildet wird aus dem Säurepolymeren und Ammoniak, Hydrazin, einem niedrigsiedenden primären oder sekundären aliphatischen Amin und in Wasser von pH 5 bis 8 löslich ist.

4. Verfahren nach Anspruch 2 oder 3, worin die Zusammensetzung 0,01 bis 5 Gew.-%, bezogen auf das Gesamtgewicht, eines Vernetzungsmittels für das Polymere enthält, wobei das Vernetzungsmittel Harnstoff, ein Di- oder Triamin, ein Di- oder Triamid oder ein Carbonat, Bicarbonat, Oxid, Hydroxid, Nitrat oder Halogenid von Calcium, Barium, Beryllium oder Magnesium ist.

5. Verfahren nach einem der Ansprüche 1—4, worin die Zusamennsetzung 0,01 bis 1 Gew.-%, bezogen auf das Gesamtgewicht, einer alkalischen Verbindung enthält, so daß die Zusammensetzung einen pH-Wert von 6,5 bis 8,0 hat.

6. Verfahren nach einem der Ansprüche 1—5, worin das flüssige Lösungsmittel ein Alkohol mit 1 bis 5 Kohlenstoffatomen, Aceton, Methylethylketon, Dioxan, Methylenchlorid, Wasser oder eine Mischung von 2 oder mehr davon ist.

7. Verfahren nach einem der Ansprüche 1—6, worin die Zusammensetzung enthält 50 bis 90 Gew.-% des flüssigen Lösungsmittels, 4 bis 13 Gew.-% des filmbildenden Polymeren und 5 bis 30 Gew.-% des einzukapselnden Materials, wenn letzteres nicht ein Pheromon ist, und 0,05 bis 10 Gew.-% davon, wenn dieses Material ein Pheromon ist.

8. Verfahren nach einem der Ansprüche 1—7, worin das einzukapselnde Material ein Spurenmineral, ein Insektizid, ein Düngemittel, ein Akarizid, ein Nematozid, ein Molluskizid, ein Herbizid, ein Fungizid, ein Pheromon, ein Odorans, ein Duftstoff, ein Haftmittel, ein Repellant, ein Pflanzenreguliermittel oder eine Mischung von 2 oder mehr davon ist.

9. Verfahren nach einem der Ansprüche 1—8, worin die Zusammensetzung ein weiteres Polymeres und/oder ein Haftmittel enthält, um so die Filmbildungseigenschaften des filmbildenden Polymeren zu modifizieren, die Freisetzung des Materials aus den resultierenden Mikrokapseln und/oder die Haftung des filmbildenden Polymeren an dem einzukapselnden Material zu steuern (zu kontrollieren).

10. Verfahren nach einem der Ansprüche 1—9, worin das Kernmittel ein absorbierendes festes Material und/oder ein Ultraviolett-Abschirmungsmaterial enthält.

11. Verfahren nach einem der Ansprüche 1—10, worin das Kernmittel umfaßt einen Monohydroxyalkohol mit 6 bis 20 Kohlenstoffatomen oder ein einfach- oder ein mehrfach- ungesättigtes Derivat devon, einen Polyhydroxyalkohol mit 2 bis 10 Kohlenstoffatomen, einen Monoäther oder einen Mono-, Di- oder Triester davon, eine Fettsäure mit 8 bis 20 Kohlenstoffatomen oder einen Ester davon.

12. Verfahren nach Anspruch 11, worin das Kernmittel Sojabohnenöl umfaßt.

**Revendications**

1. Un procédé de microencapsulation par pulvérisation qui consiste à pulvériser dans l'atmosphère une composition comprenant 35 à 99% en poids d'un véhicule liquide, 0,1 à 25% en poids d'un polymère filmogène et pas plus de 40% en poids de la substance à encapsuler de manière à provoquer l'évaporation dudit véhicle liquide, la coacervation dudit polymère et l'encapsulation par celui-ci de la substance pendant que la composition se trouve encore à l'état de liquide pulvérisé caractérisé en ce que ladite composition contient en outre environ 1% à 40% en poids d'un agent formant noyau qui est insoluble dans ledit polymère et apte à contrôler la libération de ladite substance à partir des microcapsules résultantes, les pourcentages étant basés sur le poids total de la composition.

2. Procédé selon la revendication 1, dans lequel ledit polymère contient au moins un monomère de formule

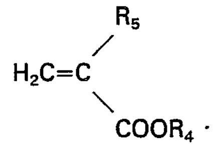

dans laquelle $R_4$ est l'hydrogène ou un groupe alkyle, cycloalkyle, aryle ou aralkyl n'ayant pas plus de 30 atomes de carbone et $R_5$ est l'hydrogène ou un groupe alkyle, cycloalkyle, aryle ou aralkyle n'ayant pas plus de 12 atomes de carbone.

3. Procédé selon la revendication 1 ou 2, dans lequel le polymère est le sel d'un polymère acide avec une distribution statistique de n% en poids de motifs de formule I, de x% en poids de motifs de formule II, de y% en poids de motifs de formule III et de z% en poids de motifs de formule IV:

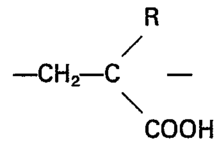

(I)

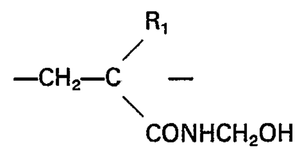

(II)

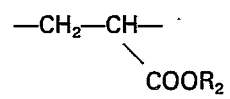

(III)

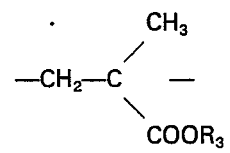

(IV)

formules dans lesquelles R et $R_1$ sont chacun de l'hydrogène ou un méthyle, $R_2$ est un méthyle, un éthyle, un propyle ou un butyl, $R_3$ est un méthyle ou un éthyle, n est 3 à 12, x est 8 à 25, y est 45 à 89, z est 0 à 44 et $n+x+y+z=100$, ledit sel étant obtenu à partir dudit polymère acide de d'ammoniaque, d'hydrazine, d'une amine aliphatique primaire ou secondaire à bas point d'ébullition et étant soluble dans l'eau à un pH de 5 à 8.

4. Procédé selon la revendication 2 ou 3, dans lequel la composition contient 0,01 à 5% en poids, par rapport au poids total, d'un agent réticulant pour le polymère l'agent réticulant étant l'urée, une di- ou une triamine, un di- ou un triamide, un carbonate, un bicarbonate, un oxyde, un hydroxde, un nitrate ou un halogénure de calcium, de baryum, de beryllium ou de magnésium.

5. Procédé selon l'une quelconque des revendications 1 à 4, dans lequel la composition contient 0,01 à 1% en poids, par rapport au poids

total, d'un composé alcalin tel que la composition possède un pH de 6,5 à 8,0.

6. Procédé selon l'une quelconque des revendications 1 à 5, dans lequel le véhicule liquide est un alcool possédant 1 à 5 atomes de carbone, l'acétone, la méthyléthylcétone, le dioxanne, le chlorure de méthylène, l'eau ou un mélange de deux ou plusieurs de ceux-ci.

7. Procédé selon l'une quelconque des revendications 1 à 6, dans lequel la composition contient 50 à 90% en poids du véhicule liquide, 4 à 13% en poids du polymère filmogène et 5 à 30% en poids de la substance à encapsuler lorsque cette dernière n'est pas une phéromone et 0,05 à 10% en poids de celle-ci lorsque ladite substance est une phéromone.

8. Procédé selon l'une quelconque des revendications 1 à 7, dans lequel la substance à encapsuler est un oligo-élément, un insecticide, un fertilisant, un acaricide, un nématocide, un molluscicide, un herbicide, un fongicide, une phéromone, une substance odorante, un parfum, un attracteur, un substance répulsive, un régulateur de croissance des plantes ou un mélange de deux ou plusieurs de ceux-ci.

9. Procédé selon l'une quelconque des revendications de 1 à 8, dans lequel la composition contient un polymère additionnel et/ou un agent d'adhérence susceptibles de modifier les propriétés filmogènes du polymère filmogène, de contrôler la libération de ladite substance à partir des microcapsules résultantes et/ou l'adhérence du polymère filmogène à la substance à encapsuler.

10. Procédé selon l'une quelconque des revendications 1 à 9, dans lequel l'agent formant noyau contient une matière solide absorbante et/ou une matière protectrice contre les ultraviolets.

11. Procédé selon l'une quelconque des revendications 1 à 10, dans lequel l'agent formant noyau est constitué par un monoalcool ayant 6 à 20 atomes de carbone ou un de ses dérivés mono- ou polyinsaturés, par un polyalcool ayant 2 à 10 atomes de carbone, un monoéther ou un mono-di- ou triester de celui-ci, par un acide gras ayant 8 à 20 atomes de carbone ou un de ses esters.

12. Procédé selon la revendication 11, dans lequel l'agent formant noyau est constitué par de l'huile de soja.